# EUROPEAN PATENT APPLICATION

(11) **EP 3 575 265 A1**
(43) Date of publication of application: **04.12.2019**
(21) Application number: 18744549.9
(22) Date of filing: 24.01.2018
(51) Int. Cl.: C01B 32/198

(54) **CARBON FILM MANUFACTURING METHOD AND FILM MANUFACTURING METHOD**

(30) Priority: 27.01.2017 JP 2017013184
(71) Applicant: Shinshu University, Matsumoto City, Nagano 390-8621 (JP); Kotobuki Tsushou Co., Ltd., Kitakyushu-shi, Fukuoka 8028540 (JP)
(72) Inventor: KANEKO Katsumi, Nagano-shi Nagano 380-8553 (JP); TAKAGI Toshio, Kitakyushu-shi Fukuoka 802-0042 (JP); SHIMIZU Yasushi, Kitakyushu-shi Fukuoka 8028540 (JP); MURATA Katsuyuki, Kitakyushu-shi Fukuoka 8028540 (JP)
(74) Representative: Parker, Andrew James
(86) International application number: PCT/JP2018/002062
(87) International publication number: WO 2018/139473

(57) **Abstract**

Provided is a method for forming a carbon film having a uniform thickness at low cost with ease.

Disclosed is a method for manufacturing a carbon film in which a film having carbon as a main component is formed on a support 2 having a predetermined shape, in which the support 2 made of a hydrophilic material is disposed on a base 4 made of a hydrophobic material and a coating liquid 1 obtained by dispersing a carbon material in a polar solvent is supplied onto the support 2 and then dried. Alternatively, the support 2 made of an oleophilic material is disposed on a base 4 made of an oleophobic material and a coating liquid 1 obtained by dispersing a carbon material in a non-polar solvent is supplied onto the support 2 and then dried.

## Description

### Technical Field

The present invention relates to a method for forming a thin film having carbon as a main component on a support having a predetermined shape.

Further, the present invention relates to a method for forming a thin film made of a predetermined material on a support.

### Background Art

In order to manufacture a carbon filter having ion selectivity, a carbon film is formed on a support such as a membrane filter, and fine pores are formed in this carbon film to obtain a filter.

In the related art, in order to form a carbon film, an OX-NH ethanol dispersion obtained by dispersing carbon nanohorn in ethanol at a predetermined concentration is prepared as a coating liquid.

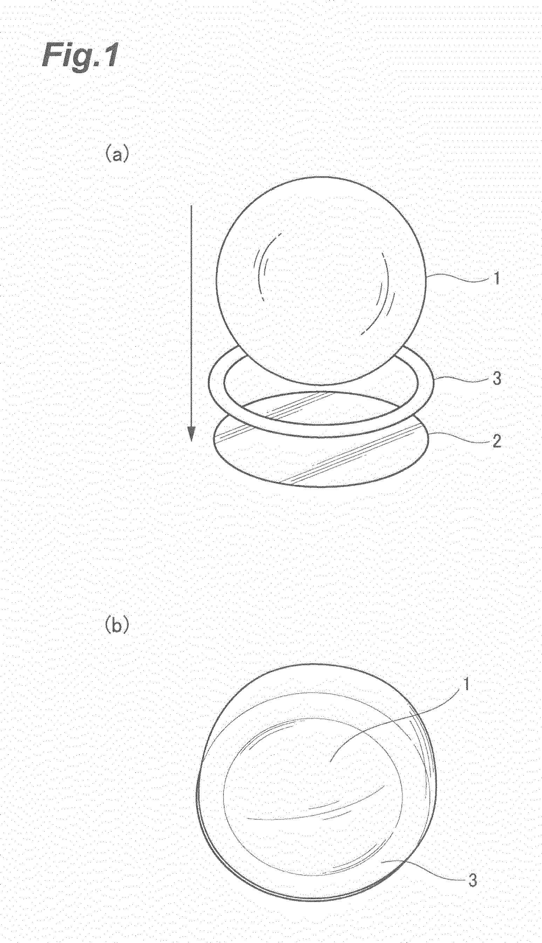

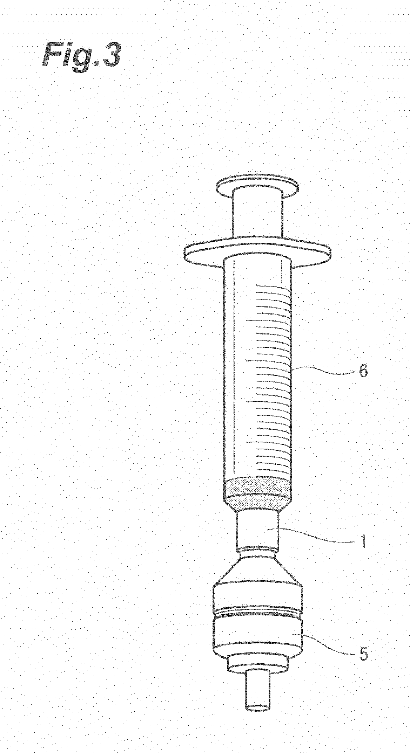

As illustrated in FIG 3, a membrane filter serving as a support 2 (see FIG. 1) is set to a filter holder 5, and a coating liquid 1 is injected into the membrane filter by a syringe 6. At this time, by an injection amount of the coating liquid 1, which is determined from the concentration thereof, being accurately injected, the thickness of a carbon film can be precisely controlled.

Subsequently, the coating liquid with the filter holder 5 is dried with an oven set at 90°C to form a carbon film on the support 2.

At this time, in order to prevent the coating liquid 1 from flowing backward from the inside of the filter holder 5, a vacuum drier cannot be used instead of the oven.

Thereafter, the support 2 and the carbon film are taken out from the filter holder 5, fine pores are formed by subjecting the carbon film to oxidation treatment or the like so that the carbon film can be used as a carbon filter or the like.

A sample of the carbon filter formed in this way is returned to the filter holder 5, an ionic solution is caused to pass through the carbon filter, and then the carbon filter is used in an ion selectivity measurement test or the like.

In the method for manufacturing a carbon film of the related art, it takes time to increase a negative pressure for injecting the coating liquid 1 and it also takes time and effort to take out and input the membrane filter serving as the support 2 from and to the filter holder 5. Further, since the coating liquid 1 is held in the filter holder 5, it also takes much time to perform drying.

Further, in the carbon film formed by the method of the related art, a surface opposite to the face being contact with the support 2 has an uneven shape along the shape of a component of the filter holder 5 other than the support 2.

Therefore, unevenness in the thickness of the carbon film is generated to degrade quality.

Further, when the support 2 and the carbon film are taken out from the filter holder 5 for the oxidation treatment or the like of the carbon film and then are returned to the filter holder 5, the support and the carbon film are required to be attached to the filter holder such that the unevenness on the surface of the carbon film (carbon filter) coincides with the shape of the filter holder 5, which requires time and effort.

As a method for manufacturing a carbon film (a catalyst electrode layer of a fuel cell), Patent Literature 1 discloses the invention in which catalyst-supported particles (platinum-supported carbon) and an ionomer serving as materials are dispersed in a solvent to prepare a catalyst ink having a viscosity adjusted to a desired viscosity, this catalyst ink is applied onto an electrolyte membrane serving as a support by a die coating method, and the catalyst ink is dried, whereby a catalyst electrode layer is formed.

In the method of Patent Literature 1, it is necessary to adjust the viscosity of the catalyst ink to a desired viscosity in order to achieve the strength and performance of a carbon film (electrode), which requires time and effort. Further, since the film is formed by the die coating method, it is necessary to move the support at a constant speed with respect to a die coater at the time of application of the catalyst ink.

Patent Literature 2 discloses the invention in which a carbon material is dispersed in a solvent added with a basic high-molecular dispersant, and a voltage is applied in this solvent while the support is set as an anode to electrodeposit the carbon material, whereby a carbon film is formed on the support.

In the method of Patent Literature 2, since it is necessary to use the basic high-molecular dispersant or to apply a voltage, the manufacturing cost of the carbon film increases. Further, in order to increase the film thickness, it is necessary to repeat electrodeposition, cleansing, and drying steps, which requires time and effort.

Patent Literature 3 discloses the invention in which carbon particles and a resin are dispersed in a solvent, this dispersion is forced to scatter (electrospinning) while a voltage is applied, and a nonwoven fabric is formed on a collector serving as a support while the solvent is volatilized in the air.

In the method of Patent Literature 3, a special apparatus that scatters the dispersion while applying a voltage is necessary, and thus the manufacturing cost increases.

### Citation List

### Patent Literature

Patent Literature 1: International Publication No. WO2013/031060
Patent Literature 2: Japanese Unexamined Patent Publication No. 2007-25 803 1
Patent Literature 3: International Publication No. WO2011/089754

### Summary of Invention

### Technical Problem

The present invention has been made in order to solve the above-described problems, and an object thereof is to provide a method for forming a carbon film and other films having a uniform thickness at low cost with ease.

### Solution to Problem

In the present invention, means for solving the above-described problems are as follows.

A first invention is a method for manufacturing a carbon film in which a film having carbon as a main component is formed on a support having a predetermined shape, the method including disposing the support made of a hydrophilic material on a base made of a hydrophobic material, and supplying a coating liquid obtained by dispersing a carbon material in a polar solvent onto the support and then drying the coating liquid.

A second invention is a method for manufacturing a carbon film in which a film having carbon as a main component is formed on a support having a predetermined shape, the method including disposing a packing at a circumference of the support, the packing circumscribing a side circumference of the support and having a planar shape and a predetermined height, and supplying a coating liquid obtained by dispersing a carbon material onto the support and then drying the coating liquid.

A third invention is a method for manufacturing a carbon film in which a film having carbon as a main component is formed on a support having a predetermined shape, the method including disposing the support made of an oleophilic material on a base made of an oleophobic material, and supplying a coating liquid obtained by dispersing a carbon material in a non-polar solvent onto the support and then drying the coating liquid.

A fourth invention is a method for manufacturing a film in which a film having a predetermined film material as a main component is formed on a support having a predetermined shape, the method including disposing the support made of a hydrophilic material on a base made of a hydrophobic material, and supplying a coating liquid obtained by dispersing the film material in a polar solvent onto the support and then drying the coating liquid.

A fifth invention is a method for manufacturing a film in which a film having a predetermined film material as a main component is formed on a support having a predetermined shape, the method including disposing a packing at a circumference of the support, the packing circumscribing a side circumference of the support and having a planar shape and a predetermined height, and supplying a coating liquid obtained by dispersing the film material onto the support and then drying the coating liquid.

A sixth invention is a method for manufacturing a film in which a film having a predetermined film material as a main component is formed on a support having a predetermined shape, the method including disposing the support made of an oleophilic material on a base made of an oleophobic material, and supplying a coating liquid obtained by dispersing the film material in a non-polar solvent onto the support and then drying the coating liquid.

### Advantageous Effects of Invention

According to the first invention, a carbon film having a uniform thickness without unevenness can be easily formed by disposing the support made of a hydrophilic material on a base made of a hydrophobic material, and supplying a coating liquid obtained by dispersing a carbon material in a polar solvent onto the support and then drying the coating liquid.

According to the second invention, a carbon film having a uniform thickness without unevenness can be easily formed by disposing a packing at a circumference of the support, the packing circumscribing a side circumference of the support and having a planar shape and a predetermined height, and supplying a coating liquid obtained by dispersing a carbon material onto the support and then drying the coating liquid.

According to the third invention, a carbon film having a uniform thickness without unevenness can be easily formed by disposing the support made of an oleophilic material on a base made of an oleophobic material, and supplying a coating liquid obtained by dispersing a carbon material in a non-polar solvent onto the support and then drying the coating liquid.

According to the fourth invention, a film having a uniform thickness without unevenness can be easily formed by disposing the support made of a hydrophilic material on a base made of a hydrophobic material, and supplying a coating liquid obtained by dispersing the film material in a polar solvent onto the support and then drying the coating liquid.

According to the fifth invention, a film having a uniform thickness without unevenness can be easily formed by disposing a packing at a circumference of the support, the packing circumscribing a side circumference of the support and having a planar shape and a predetermined height, and supplying a coating liquid obtained by dispersing the film material onto the support and then drying the coating liquid.

According to the sixth invention, a film having a uniform thickness without unevenness can be easily formed by disposing the support made of an oleophilic material on a base made of an oleophobic material, and supplying a coating liquid obtained by dispersing the film material in a non-polar solvent onto the support and then drying the coating liquid.

### Brief Description of Drawings

FIG. 1 is an explanatory diagram illustrating a method for manufacturing a carbon film according to a first embodiment, in which
FIG. 1(a) illustrates a state before supplying a coating liquid and FIG 1(b) illustrates a state after supplying the coating liquid.
FIG. 2 is an explanatory diagram illustrating a method for manufacturing a carbon film according to a second embodiment and a third embodiment, in which FIG. 2(a) illustrates a state before supplying a coating liquid and FIG. 2(b) illustrates a state after supplying the coating liquid.
FIG. 3 is an explanatory diagram illustrating a method for manufacturing a carbon film of the related art.

### Description of Embodiments

### <First Embodiment>

Hereinafter, a method for manufacturing a carbon film according to a first embodiment of the present invention will be described.

This method is, as illustrated FIG 1, characterized in that a side circumference of a support 2 is covered with a packing 3, a coating liquid 1 is supplied onto the support to form a layer, and the coating liquid is dried to form a carbon film.

First, the coating liquid 1 obtained by dispersing a carbon material for forming a carbon film at a predetermined concentration is prepared.

As the carbon material, a carbon nanomaterial such as carbon nanohorn, carbon nanotube, or graphene oxide, carbon black, and the like can be used.

Further, a solvent of the coating liquid 1 is necessary to be a highly polar solvent, and water, ethanol, methanol, and the like can be used.

In the first embodiment, as the coating liquid, a graphene oxide (GO) aqueous dispersion obtained by dispersing graphene oxide in ultrapure water was used.

Other than, a nanohorn oxide (OX-NH) ethanol dispersion, a carbon nanotube (CNT) ethanol dispersion, and the like can also be used.

The support 2 of the carbon film is necessary to have fine pores that are hydrophilic and relatively uniform, and a membrane filter, a ceramic sintered filter, and the like can be used.

As such a support 2, in the first embodiment, a membrane filter made of polycarbonate was used.

The packing 3 is necessary to be watertight and make it hard for the coating liquid to adhere thereto, and silicon, Teflon (registered trademark), and the like can be used.

The shape of the packing 3 is necessary to be a shape circumscribing a side circumference of the support, prevent the leakage of the coating liquid 1, and have a predetermined height capable of holding the layer of the coating liquid 1.

In the first embodiment, the annular silicon packing 3 circumscribing the circular support 2 was used. The height of the packing 3 is set to be higher than the thickness of the support 2.

In order to form a carbon film, as illustrated in FIG. 1(a), first, the packing 3 is disposed at the side circumference of the support 2, and then the coating liquid 1 is supplied onto the support 2.

As illustrated in FIG. 1(b), since the liquid leakage of the coating liquid 1 is prevented by the packing 3 and the upper side of the support 2 is open, the surface of the coating liquid 1 is in a state of being held by surface tension.

In this state, the coating liquid 1 is dried.

Drying is performed by heating to 90°C with an oven. Drying with a vacuum drier is also possible.

The carbon film obtained in this way can be used for various use applications in addition to a filter having ion selectivity.

With the method for manufacturing a carbon film according to the first embodiment, a carbon film having a uniform thickness without unevenness can be easily formed.

Further, even in the case of using the coating liquid 1 having a low concentration of carbon or the coating liquid 1 having a low viscosity, a carbon film can be easily formed.

By holding an oxidizing agent aqueous solution such as hydrogen peroxide water on the filter formed from this carbon film by surface tension, the filter can be subjected to an oxidation treatment. Other than, by holding a solution on the filter by surface tension, various treatments can be performed.

### <Second Embodiment>

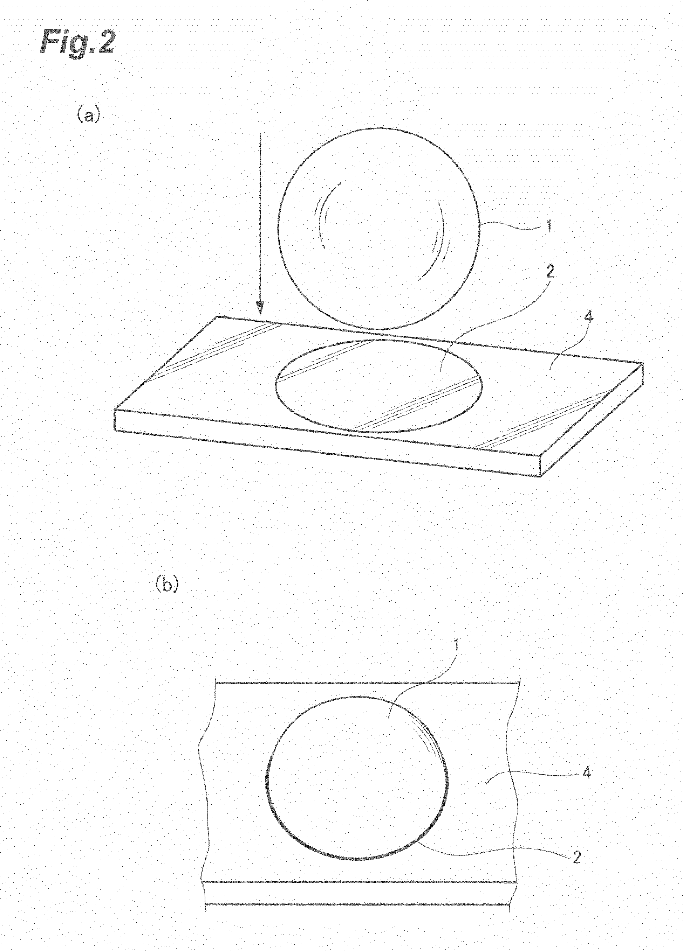

A method for manufacturing a carbon film according to a second embodiment is, as illustrated in FIG. 2, characterized in that a base 4 made of a hydrophobic material, a support 2 made of a hydrophilic material, and a coating liquid 1 obtained by dispersing a carbon material in a polar solvent are used.

In the coating liquid 1 of the second embodiment, the carbon material is dispersed at a predetermined concentration similarly to the first embodiment.

A solvent of the coating liquid 1 is necessary to be a polar solvent having an electric permittivity of 6 or higher, and water, ethanol, methanol, and the like can be used.

In the second embodiment, a graphene oxide aqueous dispersion obtained by dispersing graphene oxide in ultrapure water was used.

The base 4 is made of a hydrophobic material and is preferably a plate material having a sufficient large area with respect to the support 2.

The hydrophobic material means a material that repels the polar solvent on the surface thereof, and includes a material subjected to a surface treatment or the like to have water repellency, in addition to a material that has a lower affinity with the polar solvent than the support 2.

In the second embodiment, the base 4 made of Teflon (registered trademark) was used.

The support 2 is made of a hydrophilic material and has a role of holding the carbon film similarly to the first embodiment.

The hydrophilic material means a material that adsorbs the polar solvent on the surface thereof instead of repelling the polar solvent, and a material that has a higher affinity with the polar solvent than the base 4, or the like can be used. As an example of the hydrophilic material, a membrane filter, porous glass, and the like can be used.

In the second embodiment, as the support 2, a membrane filter made of polycarbonate was used.

In order to form a carbon film, as illustrated in FIG. 2(a), first, the support 2 is disposed on the base 4, and then the coating liquid 1 is supplied onto the support 2.

As illustrated in FIG. 2(b), since the coating liquid 1 is repelled by the base 4, the coating liquid 1 is not spilled out of the outside of the support 2 made of a hydrophilic material and is held on the support 2 by surface tension.

In this state, the coating liquid 1 is dried. The drying step is the same as in the first embodiment.

With the method for manufacturing a carbon film according to the second embodiment, a carbon film having a uniform thickness without unevenness can be easily formed.

Further, since the shape of the carbon film can be controlled by the shapes of the support 2 and the base 4, the degree of freedom of the shape of the carbon film is improved.

By disposing a plurality of supports 2 side by side on the base 4 having a large area, a number of carbon films can also be manufactured simultaneously.

Further, even in the case of using the coating liquid 1 having a low concentration of carbon or the coating liquid 1 having a low viscosity, a carbon film can be easily formed.

Therefore, the thickness of the carbon film can also be decreased. Specifically, in the case of using graphene oxide as the carbon material, a carbon film having a mass of 0.1 µg/cm² could be formed.

### <Third Embodiment>

A method for manufacturing a carbon film according to a third embodiment is, as illustrated in FIG. 2, inversely to the second embodiment, characterized in that a base 4 made of an oleophobic material, a support 2 made of an oleophilic material, and a coating liquid 1 obtained by dispersing a carbon material in a non-polar solvent.

Also in the coating liquid 1 of the third embodiment, the carbon material is dispersed at a predetermined concentration similarly to the first embodiment.

A solvent of the coating liquid 1 is necessary to be a non-polar solvent having of an electric permittivity of lower than 6, and hexane, diethyl ether, and the like can be used.

The base 4 is made of an oleophobic material and is preferably a plate material having a sufficient large area with respect to the support 2.

The oleophobic material means a material that repels the non-polar solvent on the surface thereof, and includes a material subjected to a surface treatment or the like to have a lowered affinity with the non-polar solvent, in addition to a material that has a lower affinity with the non-polar solvent than the support 2. As an example of the oleophobic material, cellulose, glass, a membrane filter subjected to a hydrophilization treatment, and the like can be used.

The support 2 is made of an oleophilic material and has a role of holding the carbon film similarly to the first embodiment.

The oleophilic material means a material that adsorbs the non-polar solvent on the surface thereof instead of repelling the non-polar solvent, and a material that has a higher affinity with the non-polar solvent than the base 4, or the like can be used. As an example of the oleophilic material, Teflon (registered trademark) and the like can be used.

In order to form a carbon film, as illustrated in FIG. 2(a), first, the support 2 is disposed on the base 4, and then the coating liquid 1 is supplied onto the support 2.

As illustrated in FIG. 2(b), since the coating liquid 1 is repelled by the base 4, the coating liquid 1 is not spilled out of the outside of the support 2 made of an oleophilic material and is held on the support 2 by surface tension.

In this state, the coating liquid 1 is dried. The drying step is almost the same as in the first embodiment, but is performed at an appropriate temperature and in an appropriate condition according to the type of the non-polar solvent.

With the method for manufacturing a carbon film according to the third embodiment, a carbon film having a uniform thickness without unevenness can be easily formed.

Further, since the shape of the carbon film can be controlled by the shapes of the support 2 and the base 4, the degree of freedom of the shape of the carbon film is improved.

By disposing a plurality of supports 2 side by side on the base 4 having a large area, a number of carbon films can also be manufactured simultaneously.

Further, according to this method, even in the case of using the coating liquid 1 having a low concentration of carbon or the coating liquid 1 having a low viscosity, a carbon film can be easily formed.

Therefore, the thickness of the carbon film can also be decreased. Specifically, in the case of using graphene oxide as the carbon material, a carbon film having a mass of 0.1 µg/cm² could be formed.

The present invention can also be applied to manufacturing of films other than the carbon film.

In the methods of the first embodiment to the third embodiment, by using a coating liquid obtained by dispersing a material other than a carbon material instead of the coating liquid 1 obtained by dispersing a carbon material, various films can be manufactured. In addition, a coating liquid obtained by mixing a carbon material and other additives and dispersing the resultant mixture in a solvent can also be used.

### Reference Signs List

1: coating liquid, 2: support, 3: packing, 4: base, 5: filter holder, 6: syringe.

## Claims

1. A method for manufacturing a carbon film in which a film having carbon as a main component is formed on a support having a predetermined shape, the method comprising:
disposing the support made of a hydrophilic material on a base made of a hydrophobic material; and
supplying a coating liquid obtained by dispersing a carbon material in a polar solvent onto the support and then drying the coating liquid.

2. A method for manufacturing a carbon film in which a film having carbon as a main component is formed on a support having a predetermined shape, the method comprising:
disposing a packing at a circumference of the support, the packing circumscribing a side circumference of the support and having a planar shape and a predetermined height; and
supplying a coating liquid obtained by dispersing a carbon material onto the support and then drying the coating liquid.

3. A method for manufacturing a carbon film in which a film having carbon as a main component is formed on a support having a predetermined shape, the method comprising:
disposing the support made of an oleophilic material on a base made of an oleophobic material; and
supplying a coating liquid obtained by dispersing a carbon material in a non-polar solvent onto the support and then drying the coating liquid.

4. A method for manufacturing a film in which a film having a predetermined film material as a main component is formed on a support having a predetermined shape, the method comprising:
disposing the support made of a hydrophilic material on a base made of a hydrophobic material; and
supplying a coating liquid obtained by dispersing the film material in a polar solvent onto the support and then drying the coating liquid.

5. A method for manufacturing a film in which a film having a predetermined film material as a main component is formed on a support having a predetermined shape, the method comprising:
disposing a packing at a circumference of the support, the packing circumscribing a side circumference of the support and having a planar shape and a predetermined height; and
supplying a coating liquid obtained by dispersing the film material onto the support and then drying the coating liquid.

6. A method for manufacturing a film in which a film having a predetermined film material as a main component is formed on a support having a predetermined shape, the method comprising:
disposing the support made of an oleophilic material on a base made of an oleophobic material; and
supplying a coating liquid obtained by dispersing the film material in a non-polar solvent onto the support and then drying the coating liquid.
